# EUROPÄISCHE PATENTSCHRIFT

(11) **EP 1 190 831 B1**
(45) Veröffentlichungstag und Bekanntmachung des Hinweises auf die Patenterteilung: **04.02.2004**
(21) Anmeldenummer: 01120801.4
(22) Anmeldetag: 29.08.2001
(51) Int. Cl.: B29C 45/16, B29C 45/14, B60J 1/00, B62D 25/00

(54) **Verfahren zur Herstellung einer Kraftfahrzeugverscheibung**
Method for producing an automotive windscreen
Procédé la fabrication d'une vitre de véhicule automobile

(30) Priorität: 26.09.2000 DE 10047624
(43) Veröffentlichungstag der Anmeldung: 27.03.2002
(73) Patentinhaber: DURA Automotive Body & Glass Systems GmbH & Co. KG, 58840 Plettenberg (DE)
(72) Erfinder: Erner, Wolfgang, 58640 Iserlohn (DE)
(74) Vertreter: Zinnecker, Armin, Dipl.-Ing.

(56) Entgegenhaltungen:
- WO-A-00/78532
- WO-A-01/28744
- WO-A-86/00262
- DE-A- 19 642 648
- DE-A- 19 809 753
- US-A- 4 874 654
- PATENT ABSTRACTS OF JAPAN vol. 014, no. 536 (M-1052), 27. November 1990 (1990-11-27) & JP 02 227224 A (HASHIMOTO FORMING IND CO LTD), 10. September 1990 (1990-09-10)
- PATENT ABSTRACTS OF JAPAN vol. 2000, no. 23, 10. Februar 2001 (2001-02-10) & JP 2001 150484 A (ASAHI GLASS CO LTD), 5. Juni 2001 (2001-06-05)

## Beschreibung

Die Erfindung betrifft ein Verfahren zur Herstellung aus einer Kraftfahrzeugverscheibung aus einem transparenten, amorphen Kunststoff.

Bei einem vorbekannten Verfahren dieser Art, wie z.B, in der US-A-4 874 654 offenbart, wird die Kraftfahrzeugverscheibung durch einen Kunststoffspritzgießprozeß oder Thermoformprozeß in ihre Form gebracht. Bei dem transparenten, amorphen Kunststoff kann es sich um PC oder PMMA oder einen anderen Kunststoff handeln.

Aufgabe der Erfindung ist es, ein verbessertes Verfahren dieser Art vorzuschlagen.

Erfindungsgemäß wird diese Aufgabe durch die kennzeichnenden Merkmale des Anspruchs 1 gelöst. Gemäß der Erfindung werden die A-, B-, C- oder D-Säulen-Blenden durch eine in einem Kunststoffspritzgießprozeß angespritzte zweite Komponente direkt mit der vorgeformten Verscheibung verbunden. In dem Kunststoffspritzgießprozeß kann eine dritte Komponente angespritzt werden. Es ist ferner möglich, weitere Komponenten anzuspritzen. Gemäß der Erfindung können Kunststoffblenden in die Verscheibung integriert werden. Durch die in dem Kunststoffspritzgießprozeß angespritzte zweite oder gegebenenfalls dritte oder weitere Komponente werden die sonst separat und nachträglich gefügten A-, B-, C-oder D-Säulen-Blenden direkt mit der vorgeformten Verscheibung verbunden; sie bilden somit direkt die dekorative Verblendung.

Vorteilhafte Weiterbildungen sind in den Unteransprüchen beschrieben.

Die Blenden können hinter die vorgeformten transparenten Formteile durch einen Mehrkomponentenspritzgießprozeß aufgebracht werden. Es ist allerdings auch möglich, die Blenden auf die vorgeformten transparenten Formteile durch einen Mehrkomponentenspritzgießprozeß aufzubringen.

Der Mehrkomponentenspritzgießprozeß kann dabei auf verschiedenen Verfahrenstechniken beruhen; es sind eine Umlegetechnik, eine Schieberlösung, eine Indexplattenlösung oder eine Drehwerkzeuglösung vorgesehen.

Die Reihenfolge der Spritzprozesse kann variieren. Es ist möglich, daß zunächst die dekorative, eingefärbte Blende vorgespritzt wird und anschließend transparent überspritzt wird. Es ist allerdings auch möglich, die Reihenfolge umzukehren: Dementsprechend kann zunächst transparent vorgespritzt werden und anschließend die dekorative, eingefärbte Blende überspritzt werden.

Mögliche Werkstoffe für die Verblendung sind eingefärbte oder transluzente Werkstoffe auf der Basis ABS, ABS/PC, PMMA, PC, ASA, SAN.

Ausführungsbeispiele der Erfindung werden nachstehend anhand der beigefügten Zeichnung erläutert. In der Zeichnung zeigt
- Fig. 1: eine Kraftfahrzeugverscheibung in einer schematischen Darstellung und
- Fig. 2: eine Abwandlung der Kraftfahrzeugverscheibung gemäß Fig. 1.

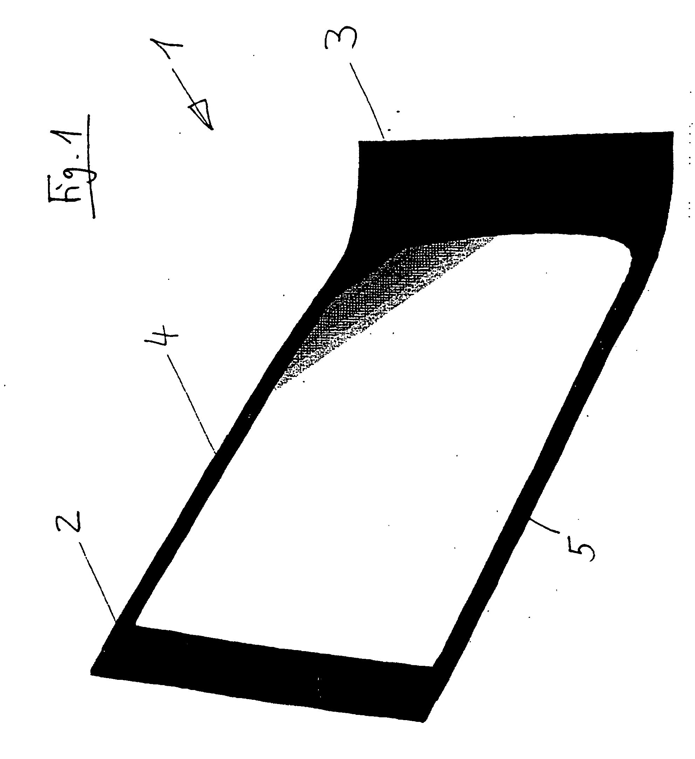

Die in Fig. 1 gezeigte Kraftfahrzeugverscheibung 1 besteht aus einem transparenten, amorphen Kunststoff, der durch einen Kunststoffspritzgießprozeß oder Thermoformprozeß in seine Form gebracht worden ist. Die B-Säulen-Blende 2 und die C-Säulen-Blende 3 sind direkt mit der vorgeformten Verscheibung 1 verbunden worden, ebenso wie die Einkapselungen 4 und 5 an dem oberen und unteren Rand der Kraftfahrzeugverscheibung 1. Sie bilden somit direkt die dekorative Verblendung.

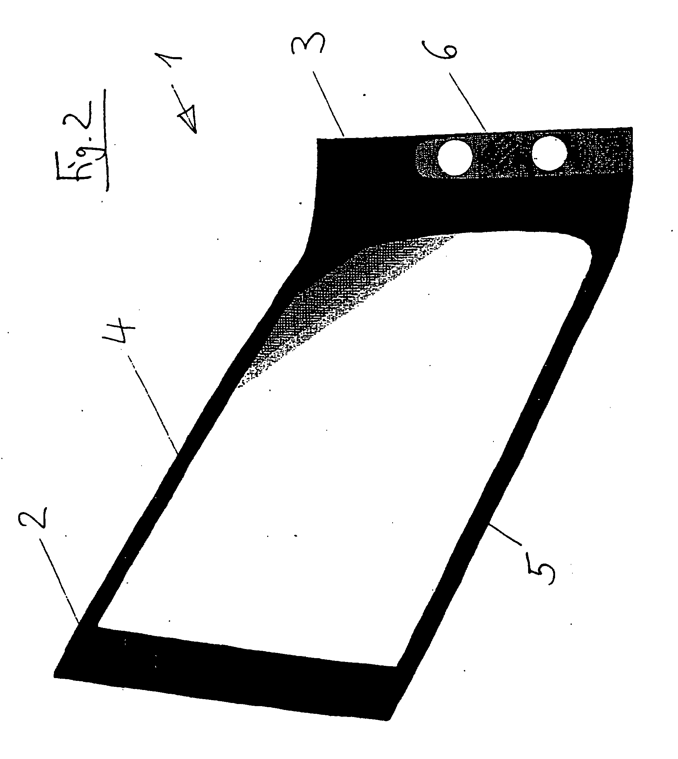

Bei der Abwandlung nach Fig. 2 sind im Bereich der C-Säulen-Blende 3 noch zusätzlich Rückleuchtenstreuscheiben 6 mitgespritzt worden.

Gemäß der Erfindung können auch die Dekor- und Zierteile im Bereich der A-, B-, C- und/oder D-Säulen mitgespritzt werden, bis hin zu den hochgesetzten Rückleuchtenstreuscheiben. Diese Blenden sind oft aus Kunststoff. Zusätzlich können sie gemäß der Erfindung jetzt die Glaskeramik imitieren und müssen nicht mehr als Einzelteile entwickelt, gefertigt und gematcht werden, wodurch eine Kosteneinsparung ermöglicht wird.

## Patentansprüche

1. Verfahren zur Herstellung einer Kraftfahrzeugverscheibung (1) aus einem transparenten, amorphen Kunststoff, bei dem die Kraftfahrzeugverscheibung (1) durch einen Kunststoffspritzgießprozeß oder Thermoformprozeß in ihre Form gebracht wird,
**dadurch gekennzeichnet,**
**daß** die A-, B-, C- oder D-Säulen-Blenden (2, 3) durch eine in einem Kunststoffspritzgießprozeß angespritzte zweite Komponente direkt mit der vorgeformten Verscheibung (1) verbunden werden.

2. Verfahren nach Anspruch 1, **dadurch gekennzeichnet, daß** in dem Kunststoffspritzgießprozeß eine dritte Komponente angespritzt wird.

3. Verfahren nach Anspruch 1 oder 2, **dadurch gekennzeichnet, daß** die Blenden (2, 3) hinter die vorgeformten transparenten Formteile (1) aufgebracht werden.

4. Verfahren nach Anspruch 1 oder 2, **dadurch gekennzeichnet, daß** die Blenden (2, 3) auf die vorgeformten transparenten Formteile (1) aufgebracht werden.

5. Verfahren nach einem der vorhergehenden Ansprüche, **dadurch gekennzeichnet, daß** als Mehrkomponentenspritzgießprozeß eine Umlegetechnik, eine Schieberlösung, eine Indexplattenlösung oder eine Drehwerkzeuglösung vorgesehen ist.

6. Verfahren nach einem der vorhergehenden Ansprüche, **dadurch gekennzeichnet, daß** zunächst die Blende vorgespritzt und anschließend transparent überspritzt wird.

7. Verfahren nach einem der Ansprüche 1 bis 5, **dadurch gekennzeichnet, daß** zunächst transparent vorgespritzt und anschließend die Blende überspritzt wird.

## Claims

1. Method for producing an automotive windscreen (1) from a transparent, amorphous plastic, in which the automotive windscreen (1) is brought into its form by a plastics injection-moulding process or thermoforming process, **characterized in that** the A-pillar, B- pillar, C- pillar or D-pillar trims (2, 3) are connected directly to the pre-formed windscreen (1) by a second component moulded on in a plastics injection-moulding process.

2. Method according to Claim 1, **characterized in that** a third component is moulded on in the plastics injection-moulding process.

3. Method according to Claim 1 or 2, **characterized in that** the trims (2, 3) are applied behind the pre-formed transparent moulded parts (1).

4. Method according to Claim 1 or 2, **characterized in that** the trims (2, 3) are applied onto the pre-formed transparent moulded parts (1).

5. Method according to one of the preceding claims, **characterized in that** a transfer technique, a core-back solution, an index-plate solution or a rotating-tool solution is provided as a multi-. component injection-moulding process.

6. Method according to one of the preceding claims, **characterized in that** the trim is first pre-moulded and then transparently overmoulded.

7. Method according to one of Claims 1 to 5, **characterized in that** transparent pre-moulding is carried out first and then the trim is overmoulded.

## Revendications

1. Procédé de fabrication d'une vitre de véhicule automobile (1) en un matériau synthétique transparent amorphe, où la vitre (1) du véhicule automobile est mise en forme par un procédé de moulage par injection de matériau synthétique ou un procédé de thermoformage,
**caractérisé**
**en ce que** les pare-soleil colonnaires A, B, C ou D (2, 3) sont reliés par un deuxième composant rapporté par formage lors du procédé de moulage par injection de matériau synthétique directement à la vitre (1) formée préalablement.

2. Procédé selon la revendication 1, **caractérisé en ce que** lors du procédé de moulage par injection de matériau synthétique, un troisième composant est rapporté par formage.

3. Procédé selon la revendication 1 ou 2, **caractérisé en ce que** les pare-soleil (2, 3) sont appliqués derrière les parties moulées transparentes (1) moulées préalablement.

4. Procédé selon la revendication 1 ou 2, **caractérisé en ce que** les pare-soleil (2, 3) sont appliqués sur les parties moulées transparentes (1) moulées préalablement.

5. Procédé selon l'une des revendications précédentes, **caractérisé en ce qu'**est prévu comme procédé de moulage par injection de plusieurs composants une technique de transfert, une solution à coulisseau, une solution à plaque d'indexation ou une solution à outils tournants.

6. Procédé selon l'une des revendications précédentes, **caractérisé en ce que** d'abord le pare-soleil est injecté préalablement et est soumis ensuite à une projection transparente.

7. Procédé selon l'une des revendications 1 à 5,
**caractérisé en ce qu'**on effectue d'abord l'injection préalable transparente et qu'on projette ensuite sur le pare-soleil.
